# FASCICULE DE BREVET EUROPEEN

(11) **EP 3 063 035 B1**
(45) Date de publication et mention de la délivrance du brevet: **17.07.2019**
(21) Numéro de dépôt: 14801950.8
(22) Date de dépôt: 30.10.2014
(51) Int. Cl.: B60N 2/12, B60N 2/235, B60N 2/20

(54) **SIÈGE ESCAMOTABLE POUR VÉHICULE**
ZURÜCKZIEHBARER SITZ FÜR EIN FAHRZEUG
RETRACTABLE SEAT FOR A VEHICLE

(30) Priorité: 30.10.2013 FR 1360643
(43) Date de publication de la demande: 07.09.2016
(73) Titulaire: Lear Corporation, Southfield, MI 48033 (US)
(72) Inventeur: HAMTACHE, Nordine, F-42700 Firminy (FR)
(74) Mandataire: Champain, Christophe
(86) Numéro de dépôt international: PCT/EP2014/073315
(87) Numéro de publication internationale: WO 2015/063203

(56) Documents cités:
- EP-A1- 2 055 524
- EP-A1- 2 363 316
- WO-A1-99/38723
- WO-A1-2008/019033
- FR-A1- 2 917 679

## Description

La présente invention concerne un siège pour véhicule, et plus particulièrement un siège escamotable offrant également une configuration Accès Places Arrières (APA), ainsi qu'un véhicule, notamment un véhicule automobile, comprenant ce siège.

Un siège pour véhicule automobile peut présenter généralement une, deux, trois ou quatre places. Dans le cas d'un siège à deux, trois ou quatre places, on utilise généralement le terme de banquette.

Classiquement, certains véhicules automobiles peuvent comprendre un ou plusieurs sièges situés en rang 2, c'est-à-dire un rang derrière le siège conducteur, et/ou en rang 3, c'est-à-dire un rang derrière le ou les sièges de rang 2.

Pour faciliter l'accès aux sièges de rang 2 et/ou de rang 3, les sièges du rang précédent peuvent incorporer une configuration dite Accès Place Arrière (APA). La configuration APA a pour fonction de dégager un espace à l'arrière du siège. Cet espace libère un passage pour l'accès d'un ou plusieurs passagers à un siège d'un rang suivant.

Par ailleurs, les sièges escamotables pour véhicule automobile, comprenant traditionnellement une assise et un dossier articulés, peuvent être déplacés l'un par rapport à l'autre entre une position nominale, aussi appelée position d'utilisation, dans laquelle l'assise est sensiblement horizontale et le dossier est sensiblement vertical en vue de recevoir un passager, à une position escamotée dans laquelle le dossier est replié sur l'assise pour dégager un espace de chargement. (II est par exemple connu du document WO2008019033 un siège de véhicule comprenant un mécanisme d'inclinaison)

Cependant, les mécanismes de commande permettant de commander l'escamotage et la configuration APA sont généralement distincts, chaque mécanisme possédant une commande et des composants qui lui sont propres.

Il peut en résulter un nombre important de composant mécaniques, si bien que la masse du siège peut augmenter, ainsi que les jeux fonctionnels qui peuvent être source de bruit pendant le fonctionnement du véhicule.

Aussi, la présente invention vise à pallier tout ou partie de ces inconvénients en proposant un siège pour véhicule, notamment véhicule automobile, offrant les possibilités d'escamotage et de configuration APA avec un mécanisme commun, limitant la masse du siège et les jeux de fonctionnement.

A cet effet, la présente invention a pour objet un siège escamotable pour véhicule, comprenant les caractéristiques de la revendication 1.

Ainsi, le siège selon l'invention offre la possibilité d'une sélection entre une configuration APA ou un escamotage du dossier, par l'intermédiaire d'une seule et même pièce, à savoir la pièce de butée.

Il en résulte une réduction de la masse et des jeux de fonctionnement du siège par rapport à des sièges traditionnels dans lesquels les mécanismes de commande de position escamotée et de configuration APA sont distincts.

Selon un mode de réalisation préféré, la pièce de butée comprend une surface d'entraînement, et le siège comprend une pièce de transmission pourvue d'une surface d'appui destinée à coopérer avec la surface d'entraînement, la pièce de transmission étant mobile par rapport à l'ensemble de soubassement entre une première position, correspondant à une position de verrouillage du dossier dans la position nominale, et une deuxième position, correspondant à une position de déverrouillage du dossier permettant le déplacement du dossier de la position nominale vers la position escamotée, la surface d'entraînement étant destinée à venir en appui contre la surface d'appui lorsque la pièce de butée est déplacée de la position effacée à la position active, de sorte que le déplacement de la pièce de butée de la position effacée à la position active provoque, par appui de la surface d'entraînement contre la surface d'appui, le déplacement de la pièce de transmission de la première position à la deuxième position et conséquemment le déverrouillage du dossier.

Ainsi, le siège selon l'invention offre la possibilité avantageuse de déverrouiller l'articulation pivot reliant le dossier et l'ensemble de soubassement et simultanément de configurer le siège pour bloquer le dossier dans une configuration APA, via le seul déplacement de la pièce de butée provoquant celui de la pièce de transmission, donc via une seule commande.

Cela évite de recourir à une commande distincte de la commande de configuration APA pour déverrouiller l'articulation du dossier et de l'ensemble de soubassement, ce qui augmenterait le nombre de composants.

Selon un mode de réalisation préféré, le siège comprend des moyens d'entraînement destinés provoquer le déplacement de la pièce de transmission de la deuxième position jusqu'à la première position simultanément au retour du dossier en position nominale, et la surface d'appui est destinée à venir en appui contre la surface d'entraînement lorsque la pièce de transmission est déplacée de la deuxième position à la première position, de sorte que le retour du dossier en position nominale provoque simultanément, par appui de la surface d'appui contre la surface d'entraînement, le déplacement de la pièce de butée de la position active à la position effacée.

Ainsi, la pièce de transmission entraîne automatiquement la pièce de butée de la position active à la position effacée lorsque le dossier retourne en position nominale. En d'autres termes, la pièce de butée est réarmée automatiquement en position effacée lorsque le dossier retrouve la position nominale.

Selon un mode de réalisation préféré, le siège comprend un organe de commande d'escamotage pour permettre à un utilisateur de commander l'escamotage du dossier, et l'organe de commande d'escamotage est relié à la pièce de transmission de manière à entraîner le déplacement de la pièce de transmission de la première position à la deuxième position.

Ainsi, l'organe de commande déverrouille le dossier qui peut basculer vers la position escamotée, sans interférer avec la pièce de butée.

Selon un mode de réalisation préféré, la pièce de butée comprend un premier bras sur lequel est ménagée la surface de butée, et un deuxième bras sur lequel est ménagée la surface d'entraînement, le deuxième bras étant décalé par rapport au premier bras selon une direction sensiblement transversale.

Ainsi, il existe un décalage selon la direction transversale Y entre le premier bras et le deuxième bras, c'est-à-dire entre la surface de butée et la surface d'entraînement, si bien que le deuxième bras est maintenu sans cesse à distance de la surface de blocage de l'ensemble de soubassement et que le siège selon l'invention offre un encombrement moindre.

Ce deuxième bras n'entrave donc pas le déplacement du dossier de la position nominale à la position escamotée, et permet à la pièce de butée en position effacée d'être déplacée au-delà de la surface de blocage pour permettre l'escamotage du dossier.

Selon un mode de réalisation avantageux, la surface de butée et la surface d'entraînement sont agencées sur un même bras de la pièce de butée.

Cette caractéristique a l'avantage de limiter l'encombrement de la pièce de butée.

De manière avantageuse, la pièce de butée comprend un troisième bras, et le dossier comprend un organe de commande relié au troisième bras pour déplacer la pièce de butée de la position effacée à la position active.

Selon un mode de réalisation préféré, l'ensemble de soubassement comprend au moins un flasque latéral, et ledit au moins un flasque latéral comprend un bord recourbé dont une extrémité délimite la surface de blocage.

Ainsi, cela permet de limiter le nombre de pièces appartenant au siège. En effet, la surface de blocage fait partie d'une pièce préexistante, à savoir le flasque, et non d'une pièce supplémentaire rapportée. Il en résulte un gain en termes de masse et une réduction des jeux fonctionnels pouvant générer un bruit.

Selon un mode de réalisation avantageux, le dossier comprend des moyens de rappel bistable pour rappeler la pièce de butée en position active lorsque la pièce de butée est en position active, et pour rappeler la pièce de butée en position effacée lorsque la pièce de butée est en position effacée.

Ainsi, la pièce de butée est bistable, c'est-à-dire stable dans la position effacée et stable dans la position active.

Cela permet un fonctionnement sécurisé et cela permet de limiter les vibrations pouvant survenir en fonctionnement, c'est-à-dire lorsque le véhicule se déplace.

Par moyens de rappel bistable on entend moyens de rappel selon deux positions stables distinctes.

De manière avantageuse, les moyens de rappel comprennent un unique ressort.

Ainsi, le nombre de pièces mécaniques est limité, ce qui offre une masse limitée et des jeux de fonctionnement en nombre moins important que pour des sièges de l'état de la technique.

Selon un mode de réalisation avantageux, la pièce de butée est configurée pour subir un effort de traction quand le siège est bloqué dans la position intermédiaire APA.

Un avantage de cette caractéristique est de diminuer l'encombrement de la pièce de butée, car la butée est réalisée derrière l'axe de rotation de la pièce de butée.

Selon un mode de réalisation préféré, la surface de butée est sensiblement plane.

Cette caractéristique améliore la fiabilité du blocage en position APA. En outre, quand la surface de blocage est également sensiblement plane, la répartition des efforts est plus grande, ce qui améliore sensiblement la robustesse du siège.

Selon un mode de réalisation avantageux, la pièce de butée est formée d'une seule et même pièce.

Cette caractéristique permet de limiter les jeux de fonctionnement, en vue de réduire le bruit quand un véhicule équipé du siège se déplace.

Selon une possibilité avantageuse, la pièce de butée comprend une partie principale et une partie de contact assemblées l'une à l'autre par emboîtement d'une ouverture polygonale dans une portion de section polygonale de forme complémentaire de celle de l'ouverture.

Un avantage de cette caractéristique est une robustesse améliorée.

Selon un autre aspect de la présente invention, celle-ci concerne également un véhicule, notamment un véhicule automobile, comprenant un siège escamotable ayant les caractéristiques précitées.

Le véhicule ainsi équipé de ce siège présente une masse limitée et est génère un bruit limité en fonctionnement.

D'autres caractéristiques et avantages ressortiront clairement de la description ci-après d'un mode de réalisation de la présente invention, donné à titre d'exemple non limitatif, en référence aux dessins annexés dans lesquels :
- La figure 1 est une vue en perspective d'un siège selon un mode de réalisation de l'invention,
- La figure 2 est une vue de côté d'une partie d'un siège selon un mode de réalisation de l'invention, le dossier étant en position nominale,
- La figure 3 est une vue de côté d'une partie d'un siège selon un mode de réalisation de l'invention, le dossier étant en position intermédiaire APA,
- La figure 4 est une vue de côté d'une partie d'un siège selon un mode de réalisation de l'invention, le dossier étant en position escamotée,
- La figure 5 est une vue de côté d'un siège selon un mode de réalisation de l'invention, en position nominale,
- La figure 6 est une vue d'un détail d'un siège selon un mode de réalisation de l'invention, en position nominale,
- La figure 7 est une vue de côté d'un siège selon un mode de réalisation de l'invention, en position intermédiaire APA,
- La figure 8 est une vue d'un détail d'un siège selon un mode de réalisation de l'invention, en position intermédiaire APA,
- La figure 9 est une vue de côté d'un siège selon un mode de réalisation de l'invention, en position escamotée.

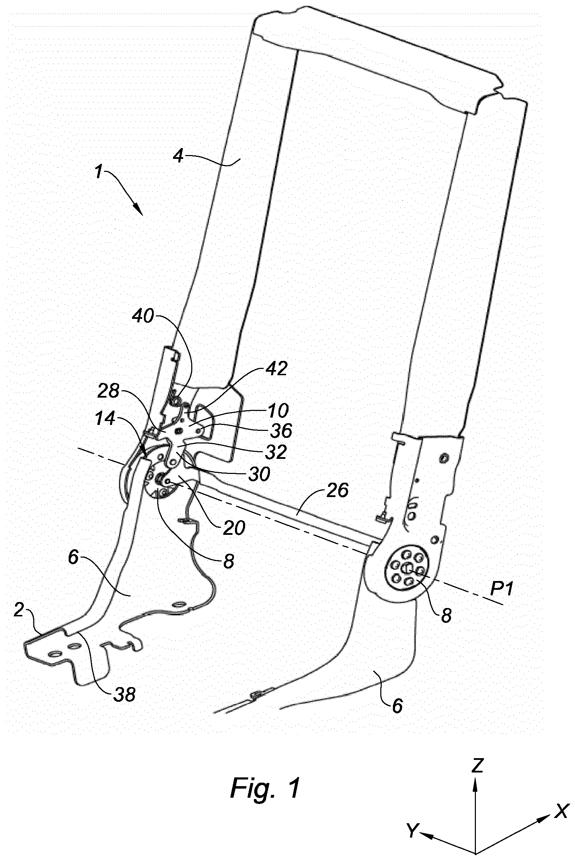

La figure 1 montre un siège 1 escamotable selon un mode de réalisation de l'invention. Le siège 1 est destiné à équiper un véhicule, notamment un véhicule automobile.

On notera que par siège on entend siège ou banquette, c'est-à-dire siège pouvant recevoir un ou plusieurs passagers.

Certains véhicules automobiles peuvent comprendre un ou plusieurs sièges situés en rang 2, c'est-à-dire un rang derrière le siège conducteur, et/ou en rang 3, c'est-à-dire un rang derrière le ou les sièges de rang 2. Le siège 1 peut correspondre par exemple à un siège de rang 1, de rang 2 ou de rang 3.

On précise également que la description est réalisée par rapport à un référentiel cartésien lié à un véhicule automobile, l'axe X étant orienté dans la direction longitudinale du véhicule, l'axe Y étant orienté dans la direction transversale du véhicule et l'axe Z étant orienté dans la direction verticale du véhicule. Les orientations, directions et déplacements longitudinaux, transversaux, verticaux, avant, arrière, latéraux sont ainsi définis par rapport à ce référentiel.

Comme on peut le voir sur la figure 1, le siège 1 comprend un ensemble 2 de soubassement et un dossier 4 relié à l'ensemble 2 de soubassement par une liaison pivot P1, d'axe sensiblement transversal.

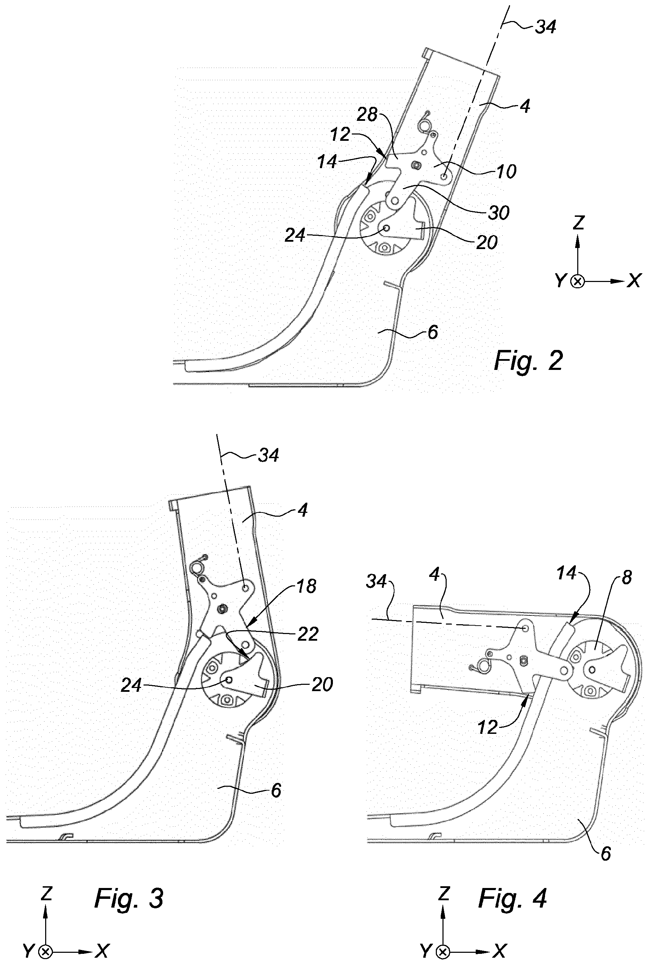

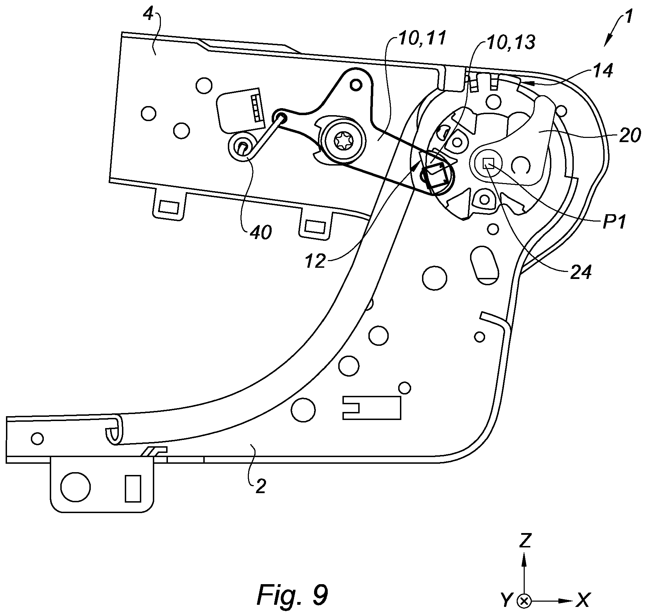

Ainsi, le dossier 4 est mobile en rotation entre une position nominale, visible sur les figures 1, 2, 5 et 6, dans laquelle le dossier 4 est destiné à soutenir le dos d'un passager assis, et une position escamotée, visible sur les figures 4 et 9, dans laquelle le dossier 4 est rabattu dans un plan sensiblement horizontal pour dégager un espace de chargement.

On notera que le dossier 4 peut présenter une pluralité de positions nominales possibles correspondant chacune à un réglage de confort possible de l'inclinaison du dossier 4. Aussi, par position nominale on entend l'une quelconque de ces positions de réglage possibles.

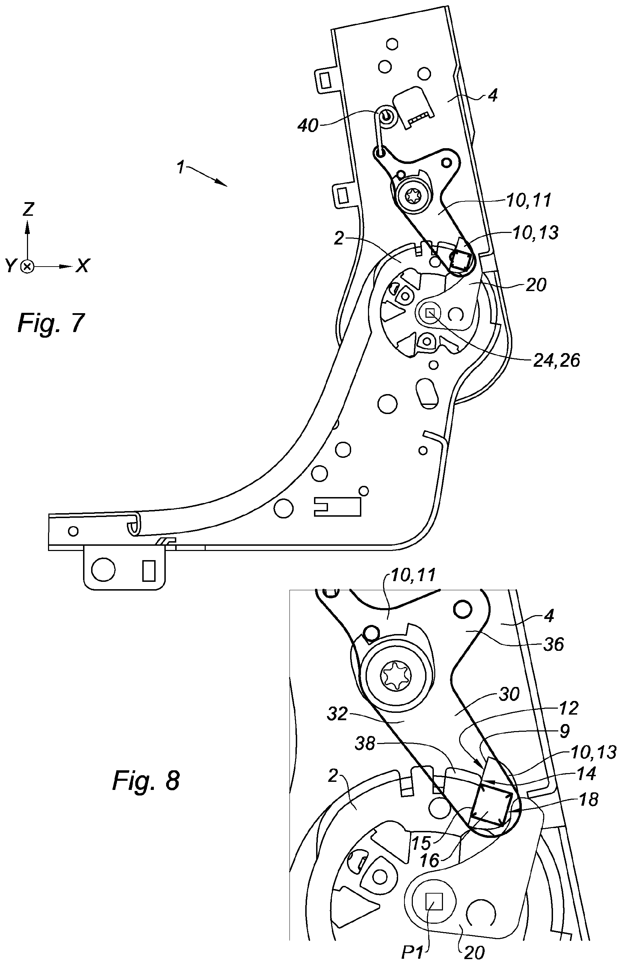

Le dossier 4 peut également être déplacé dans une position intermédiaire, visible sur les figures 3, 7 et 8, comprise entre la position nominale et la position escamotée, cette position intermédiaire correspondant à une position d'Accès Place Arrière (APA) permettant de dégager derrière le dossier 4 un passage d'accès à une place située derrière le siège 1. Ainsi, comme cela est représenté sur les figures 3 et 7, dans la position intermédiaire APA, le dossier 4 est incliné d'un angle prédéterminé vers l'avant du siège 1.

L'ensemble 2 de soubassement peut être fixé au plancher d'un véhicule.

L'ensemble 2 de soubassement comprend, selon l'exemple des figures 1 à 9, deux flasques 6 latéraux. La liaison pivot P1 peut comprendre deux articulations 8 reliant chacune un flasque 6 au dossier 4.

L'ensemble 2 de soubassement peut par ailleurs comprendre une ou plusieurs glissières sur lesquelles peuvent coulisser les flasques 6, selon une direction sensiblement longitudinale X. Le cas échéant, les glissières permettent de faire coulisser le siège 1 vers l'avant en configuration APA pour dégager un plus grand accès aux places arrière.

Bien que cela ne soit pas représenté, le siège 1 peut comprendre une assise qui peut être articulée par rapport au dossier, et une ou plusieurs bielles reliant l'avant de l'assise et l'ensemble 2 de soubassement.

Selon l'invention, le dossier 4 comprend une pièce 10 de butée opérant une sélection entre une manoeuvre d'escamotage du dossier 4 ou une manoeuvre d'inclinaison du dossier 4 en position intermédiaire APA.

La pièce 10 de butée comprend une surface 12 de butée, plus particulièrement visible sur les figures 2 à 4, 6 et 8.

L'ensemble 2 de soubassement comprend une surface 14 de blocage, également visible sur les figures 2 à 4, 6 et 8.

La surface 12 de butée et la surface 14 de blocage sont destinées à coopérer en venant en appui l'une contre l'autre pour bloquer le dossier 4 dans la position intermédiaire APA, comme cela est représenté sur les figures 3, 7 et 8.

Selon l'exemple de réalisation représenté sur les figures 1 à 4, la surface 12 de butée vient par exemple en contact ponctuel sur la surface 14 de blocage.

La surface 14 de blocage peut être ménagée sur l'un des flasques 6, si bien que l'appui de la surface 12 de butée contre la surface 14 de blocage arrête la rotation du dossier 4 par rapport à l'ensemble 2 de soubassement et provoque le cas échéant la translation vers l'avant des flasques 6 sur la ou les glissières, ce qui permet de libérer un passage plus grand derrière le siège 1. La surface 14 de blocage peut être délimitée par une encoche.

La pièce 10 de butée est mobile, par exemple mobile en rotation autour d'un axe sensiblement transversal, par rapport au dossier 4, entre une position active, visible sur la figure 3, 7 et 8 dans laquelle la surface 12 de butée est destinée à venir en appui contre la surface 14 de blocage lorsque le dossier 4 est déplacé de la position nominale vers la position escamotée, et une position effacée, visible sur les figures 2, 4, 5, 6 et 9 dans laquelle la surface 12 de butée est à distance de la surface 14 de blocage pendant l'intégralité du déplacement du dossier 4 de la position nominale à la position escamotée si bien que la surface 12 de butée et la surface 14 de blocage ne se rencontrent pas afin d'autoriser l'escamotage du siège 1.

Selon l'exemple de réalisation représenté sur les figures 1 à 9, la pièce 10 de butée comprend aussi une surface 18 d'entraînement.

Le siège 1 comprend en outre une pièce 20 de transmission pourvue d'une surface 22 d'appui destinée à coopérer avec la surface 18 d'entraînement.

Le siège 1 peut aussi comprendre un verrou (non représenté) mobile, par exemple en rotation autour d'un axe sensiblement transversal, entre une position de verrouillage dans laquelle le verrou est destiné à bloquer le dossier 4 en position nominale, et une position de déverrouillage dans laquelle le verrou libère un passage permettant au dossier 4 de quitter la position nominale. Ce verrou peut être relié à la pièce 20 de transmission. Le siège 1 peut aussi comprendre des moyens de rappel, comme un ressort (non représenté), destiné à rappeler le verrou dans la position de verrouillage.

La pièce 20 de transmission est quant à elle mobile, par exemple mobile en rotation autour d'un axe sensiblement transversal, par rapport à l'ensemble 2 de soubassement entre une première position, représentée notamment sur la figure 2, dans laquelle le verrou est en position de verrouillage, et une deuxième position, représentée notamment sur la figure 3 et sur la figure 4, dans laquelle le verrou est en position de déverrouillage. La pièce 20 de transmission peut être solidaire en rotation du verrou.

La surface 18 d'entraînement est destinée à venir en appui contre la surface 22 d'appui lorsque la pièce 10 de butée est déplacée de la position effacée à la position active, par exemple selon un contact linéique. Le déplacement de la pièce 10 de butée de la position effacée à la position active provoque alors, par appui de la surface 18 d'entraînement contre la surface 22 d'appui, le déplacement de la pièce 20 de transmission de la première position à la deuxième position et conséquemment le déplacement du verrou de la position de verrouillage à la position de déverrouillage.

Le siège 1 peut comprendre en outre des moyens d'entraînement destinés à provoquer le déplacement de la pièce 20 de transmission de la deuxième position jusqu'à la première position simultanément au retour du dossier 4 en position nominale, et la surface 22 d'appui peut être destinée à venir en appui contre la surface 18 d'entraînement lorsque la pièce 20 de transmission est déplacée de la deuxième position à la première position, de sorte que le retour du dossier 4 en position nominale provoque simultanément, par appui de la surface 22 d'appui contre la surface 18 d'entraînement, le déplacement de la pièce 10 de butée de la position active à la position effacée.

Les moyens d'entraînement comprennent par exemple un doigt relié à la pièce 20 de transmission et venant en appui contre l'ensemble de soubassement de manière à déplacer la pièce 20 de transmission de la deuxième position à la première position simultanément au retour du siège en position nominale.

Le siège 1 comprend un organe 24 de commande d'escamotage pour permettre à un utilisateur de commander l'escamotage du dossier 2.

L'organe 24 de commande d'escamotage est relié à la pièce 20 de transmission de manière à entraîner le déplacement de la pièce 20 de transmission de la première position à la deuxième position.

L'organe 24 de commande peut correspondre à un axe mobile en rotation autour d'un axe sensiblement transversal confondu avec l'axe de la liaison pivot P1. Cet axe peut être solidaire d'un levier (non représenté) permettant à un utilisateur de le faire pivoter. L'organe 24 de commande peut aussi correspondre à une sangle ou un câble relié à la pièce 20 de transmission.

La rotation de l'axe permet de déverrouiller la liaison pivot P1 reliant le dossier 4 et l'ensemble 2 de soubassement, en vue de déplacer le dossier 2 de la position nominale jusqu'à la position escamotée.

Cet axe peut être solidaire en rotation de la pièce 20 de transmission, si bien que l'actionnement de l'axe provoque le déplacement de la pièce 20 de transmission de la première position à la deuxième position.

Comme on peut le voir sur la figure 1, la pièce 20 de transmission peut faire partie intégrante d'une barre 26 de synchronisation reliant les deux articulations 8 pour synchroniser le déverrouillage et verrouillage de ces deux articulations 8. La barre 26 de synchronisation peut être solidaire en rotation de l'organe 24 de commande.

Selon le mode de réalisation représenté sur les figures 1 à 4, la pièce 10 de butée peut comprendre un premier bras 28 sur lequel est ménagée la surface 12 de butée, et un deuxième bras 30 sur lequel est ménagée la surface 18 d'entraînement. Le deuxième bras 30 est avantageusement décalé par rapport au premier bras 28 selon une direction sensiblement transversale Y, comme on peut le voir sur la figure 1.

En particulier, le deuxième bras 30 peut comprendre une portion 32 de rattachement à la pièce 10 de butée, cette portion 32 de rattachement étant courbée pour décaler transversalement le deuxième bras 30 par rapport au reste de la pièce 10 de butée.

Le dossier 4 peut par ailleurs comprendre un organe 34 de commande relié à la pièce 10 de butée pour déplacer celle-ci de la position effacée à la position active. L'organe 34 de commande peut correspondre à un câble de traction ou tirette dont une extrémité est rattachée à la pièce 10 butée, notamment à un troisième bras 36 de la pièce 10 de butée, et dont une autre extrémité peut être tractée par un utilisateur, par exemple par l'intermédiaire d'une poignée ou d'un levier (non représentés).

Comme on peut le voir sur la figure 1, la surface 14 de blocage peut être avantageusement délimitée par un bord 38 recourbé de l'un des flasques 6.

Le dossier 4 comprend avantageusement des moyens de rappel bistable pour rappeler la pièce 10 de butée en position active lorsque celle-ci est en position active, et pour rappeler la pièce 10 de butée en position effacée lorsqu'elle est en position effacée. Ainsi, la pièce 10 de butée est avantageusement bistable, c'est-à-dire stable dans la position effacée et stable dans la position active.

Les moyens de rappel bistable comprennent avantageusement un unique ressort 40. Le ressort 40 peut correspondre à un ressort de torsion comprenant une extrémité proximale montée mobile en rotation par rapport au dossier 4 autour d'un axe sensiblement transversal et une extrémité distale montée mobile en rotation par rapport à la pièce 10 de butée autour d'un axe sensiblement transversal, notamment par rapport à un quatrième bras 42 de la pièce 10 de butée. Ainsi, le ressort 40 est mobile par rapport au dossier 4 entre une première position, visible sur la figure 2 et sur la figure 4, dans laquelle le ressort 40 tend à maintenir la pièce 10 de butée dans la position effacée, et une deuxième position, visible sur la figure 3, dans laquelle le ressort 40 tend à maintenir la pièce 10 de butée dans la position active.

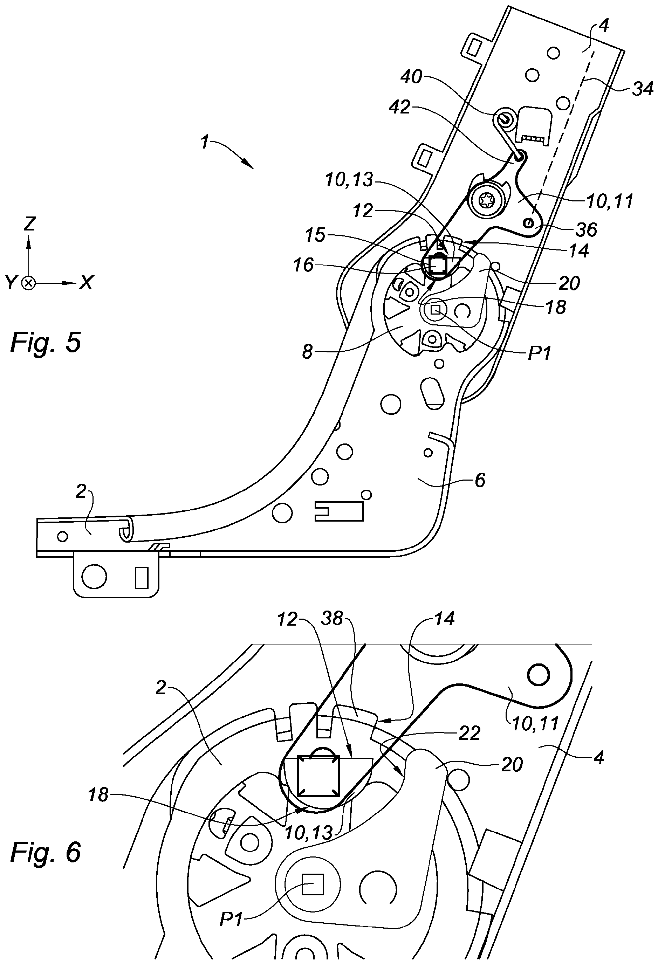

Les figures 5 à 9 illustrent un mode particulier de réalisation du siège 1 selon l'invention. Le siège 1 selon les figures 5 à 9 comprend tout ou partie des caractéristiques du siège 1 selon les figures 1 à 4, les mêmes références numériques s'appliquant aux éléments similaires.

Comme illustré sur les figures 5 à 9, la pièce 10 de butée peut être avantageusement configurée pour subir un effort de traction quand le siège 1 est bloqué dans la position intermédiaire APA (figures 7 et 8), c'est-à-dire quand la pièce 10 de butée est dans la position active, les surfaces 12, 14 de butée et de blocage étant en contact.

En particulier, la pièce 10 de butée est configurée de sorte que, dans la position APA, la surface 12 de butée soit située à l'arrière d'un plan vertical incluant l'axe de rotation de la pièce 10 de butée. En position APA du siège 1, la surface 12 de butée est donc située côté dos du siège 1 par rapport à ce plan vertical. Cela permet un travail en traction de la pièce 10 de butée.

Par ailleurs, la surface 12 de butée et la surface 18 d'entraînement sont de préférence agencées sur un même bras 30 de la pièce 10 de butée. Autrement dit, la pièce 10 de butée est ici dépourvue du premier bras 28. Cela limite l'encombrement.

La pièce 10 de butée peut comprendre un méplat 9 formant la surface 12 de butée. La surface 12 de butée est ainsi sensiblement plane.

La surface 14 de blocage peut être aussi avantageusement plane, si bien que les surfaces 12, 14 de butée et de blocage sont en contact surfacique (plan-plan).

La pièce 10 de butée peut être formée d'une seule et même pièce c'est-à-dire une pièce d'un seul tenant, en vue de limiter les jeux de fonctionnement, ou être formée par l'assemblage d'une partie principale 11 et d'une partie de contact 13, la partie principale 11 étant montée mobile par rapport au dossier 4, et la partie de contact 13 délimitant la surface 12 de butée. La partie principale 11 et la partie de contact 13 sont ici solidaires. Le cas échéant, comme cela est le cas sur les figures 5 à 9, la partie de contact 13 peut aussi comprendre la surface 18 d'entraînement.

Il est possible de prévoir des matériaux différents pour la partie principale 11 et la partie de butée 13. La partie de contact 13 peut par exemple être en un matériau plus résistant aux efforts de flexion et/ou de torsion que celui de la partie principale 11, car la partie 13 de contact s'étend transversalement et est donc essentiellement soumise à des efforts de flexion quand le dossier 4 est en position APA. La partie principale 11 peut être en un matériau plus résistant aux efforts de traction compression que la partie 13 de contact. Ces caractéristiques permettent, en limitant les coûts, d'améliorer la robustesse et qualité du blocage du dossier 4 en position APA.

La partie principale 11 peut comprendre une ouverture 15, et la partie de contact 13 peut comprendre une portion 16 destinée à être emboîtée dans l'ouverture 15 pour assembler la pièce 10 de butée. Cette ouverture 15 a une section polygonale et la portion 16 a une section polygonale de forme complémentaire de celle de l'ouverture 15, ce qui augmente la résistance de la pièce 10 de butée à un couple relatif pouvant s'exercer entre la partie principale 11 et la partie de contact 13. Cela améliore la robustesse de la pièce 10 de butée.

L'invention concerne également un véhicule, notamment un véhicule automobile, comprenant un siège escamotable tel que précédemment décrit. En particulier, le siège 1 de ce véhicule peut correspondre à un siège de rang 2.

Le fonctionnement du siège 1 selon le mode de réalisation des figures 1 à 9 est décrit ci-après, partant d'une situation initiale dans laquelle le dossier 4 est en position nominale, la pièce 10 de butée en position effacée (figures 1, 2, 5 et 6).

Pour déplacer le dossier en position intermédiaire APA, un utilisateur actionne l'organe 34 de commande, qui tracte la pièce 10 de butée et la fait pivoter de la position effacée à la position active. En pivotant ainsi, la surface 18 d'entraînement appuie contre la surface 22 d'appui de la pièce 20 de transmission, si bien que la pièce 20 de transmission est entraînée en rotation de la première position à la deuxième position. Cela provoque le déverrouillage des articulations 8 reliant le dossier 4 et l'ensemble 2 de soubassement. Le dossier 4 peut alors être pivoté vers l'avant jusqu'à ce qu'il soit arrêté par la mise en appui de la surface 12 de butée contre la surface 14 de blocage (figures 3, 7 et 8). Le dossier 4 est ainsi bloqué en position intermédiaire APA.

Lorsque, lors du déplacement retour du dossier 4 de la position intermédiaire APA à la position nominale, le dossier 4 parvient en position nominale et est verrouillé automatiquement en position nominale de la façon décrite précédemment, cela provoque la rotation automatique de la pièce 20 de transmission de la deuxième position à la première position. Cette rotation de la pièce 20 de transmission provoque la mise en appui de la surface 22 d'appui contre la surface 18 d'entraînement, et par conséquent, la rotation de la pièce 10 de butée de la position active à la position effacée (figures 2, 5 et 6).

Pour escamoter le dossier 4, l'utilisateur actionne l'organe 24 de commande. Cet organe 24 de commande, solidaire en rotation de la pièce 20 de transmission, fait pivoter celle-ci de la première position à la deuxième position, ce qui permet de déverrouiller la liaison pivot P1 reliant le dossier 4 et l'ensemble 2 de soubassement. Le dossier 4 peut être pivoté vers l'avant sans blocage jusqu'à la position escamotée (figures 4 et 9). Le décalage transversal des premier et deuxième bras, ou du deuxième bras 30 seul par rapport à la surface 14 de blocage, fait que le deuxième bras 30 se déplace à côté du flasque 6 et de la surface 14 de blocage de manière à ne pas entraver l'escamotage du dossier 4.

Bien entendu, l'invention n'est nullement limitée au mode de réalisation décrit ci-dessus, ce mode de réalisation n'ayant été qu'à titre d'exemple. Des modifications sont possibles, notamment du point de vue de la constitution des divers éléments ou par la substitution d'équivalents techniques, sans sortir pour autant du domaine de protection donné par les revendications.

## Revendications

1. Siège (1) escamotable pour véhicule, comprenant un ensemble (2) de soubassement pouvant être fixé au plancher d'un véhicule, un dossier (4) relié à l'ensemble (2) de soubassement par une liaison pivot (P1), le dossier (4) étant mobile entre une position nominale dans laquelle le dossier (4) est destiné à soutenir le dos d'un passager assis et une position escamotée dans laquelle le dossier (4) est rabattu dans un plan sensiblement horizontal pour dégager un espace de chargement, **caractérisé en ce que** le dossier (4) comprend une pièce (10) de butée pourvue d'une surface (12) de butée, et **en ce que** l'ensemble (2) de soubassement comprend une surface (14) de blocage destinée à coopérer avec la surface (12) de butée pour bloquer le dossier (4) dans une position intermédiaire APA comprise entre la position nominale et la position escamotée en vue de libérer un espace à l'arrière du siège (1), la pièce (10) de butée étant mobile par rapport au dossier (4) entre une position active, dans laquelle la surface (12) de butée est destinée à venir en appui contre la surface (14) de blocage lorsque le dossier (4) est déplacé de la position nominale vers la position escamotée, et une position effacée, dans laquelle la surface (12) de butée est à distance de la surface (14) de blocage pendant l'intégralité du déplacement du dossier (4) de la position nominale à la position escamotée de manière à autoriser l'escamotage du dossier (4), et dans lequel la pièce (10) de butée comprend une surface (18) d'entraînement, et le siège (1) comprend une pièce (20) de transmission pourvue d'une surface (22) d'appui destinée à coopérer avec la surface (18) d'entraînement, la pièce (20) de transmission étant mobile par rapport à l'ensemble (2) de soubassement entre une première position, correspondant à une position de verrouillage du dossier (4) dans la position nominale, et une deuxième position, correspondant à une position de déverrouillage du dossier (4) permettant le déplacement du dossier (4) de la position nominale vers la position escamotée, la surface (18) d'entraînement étant destinée à venir en appui contre la surface (22) d'appui lorsque la pièce (10) de butée est déplacée de la position effacée à la position active, de sorte que le déplacement de la pièce (10) de butée de la position effacée à la position active provoque, par appui de la surface (18) d'entraînement contre la surface (22) d'appui, le déplacement de la pièce (20) de transmission de la première position à la deuxième position et conséquemment le déverrouillage du dossier (4).

2. Siège (1) selon la revendication 1, **caractérisé en ce que** le siège (1) comprend des moyens d'entraînement destinés provoquer le déplacement de la pièce (20) de transmission de la deuxième position jusqu'à la première position simultanément au retour du dossier (4) en position nominale, et la surface (22) d'appui est destinée à venir en appui contre la surface (18) d'entraînement lorsque la pièce (20) de transmission est déplacée de la deuxième position à la première position, de sorte que le retour du dossier (4) en position nominale provoque simultanément, par appui de la surface (22) d'appui contre la surface (18) d'entraînement, le déplacement de la pièce (10) de butée de la position active à la position effacée.

3. Siège (1) selon la revendication 1 ou 2, **caractérisé en ce que** le siège (1) comprend un organe (24) de commande d'escamotage pour permettre à un utilisateur de commander l'escamotage du dossier (4), et **en ce que** l'organe (24) de commande d'escamotage est relié à la pièce (20) de transmission de manière à entraîner le déplacement de la pièce (20) de transmission de la première position à la deuxième position.

4. Siège (1) selon l'une des revendications 1 à 3, **caractérisé en ce que** la pièce (10) de butée comprend un premier bras (28) sur lequel est ménagée la surface (12) de butée, et un deuxième bras (30) sur lequel est ménagée la surface (18) d'entraînement, le deuxième bras (30) étant décalé par rapport au premier bras (28) selon une direction sensiblement transversale.

5. Siège (1) selon l'une des revendications 1 à 3, dans lequel la surface (12) de butée et la surface (18) d'entraînement sont agencées sur un même bras (30) de la pièce (10) de butée.

6. Siège (1) selon la revendication 4 ou 5, **caractérisé en ce que** la pièce (10) de butée comprend un troisième bras (36), et le dossier (4) comprend un organe (34) de commande relié au troisième bras (36) pour déplacer la pièce (10) de butée de la position effacée à la position active.

7. Siège (1) selon l'une des revendications 1 à 6, **caractérisé en ce que** l'ensemble (2) de soubassement comprend au moins un flasque (6) latéral, et ledit au moins un flasque (6) latéral comprend un bord (38) recourbé dont une extrémité délimite la surface (14) de blocage.

8. Siège (1) selon l'une des revendications 1 à 7, **caractérisé en ce que** le dossier (4) comprend des moyens de rappel bistable pour rappeler la pièce (10) de butée en position active lorsque la pièce (10) de butée est en position active, et pour rappeler la pièce (10) de butée en position effacée lorsque la pièce (10) de butée est en position effacée.

9. Siège (1) selon la revendication 8, **caractérisé en ce que** les moyens de rappel comprennent un unique ressort (40).

10. Siège (1) selon l'une des revendications 1 à 9, dans lequel la pièce (10) de butée est configurée pour subir un effort de traction quand le siège (1) est bloqué dans la position intermédiaire APA.

11. Siège (1) selon l'une des revendications 1 à 10, dans lequel la surface (12) de butée est sensiblement plane.

12. Siège (1) selon l'une des revendications 1 à 11, dans lequel la pièce (10) de butée est formée d'une seule et même pièce.

13. Siège (1) selon l'une des revendications 1 à 11, dans lequel la pièce (10) de butée comprend une partie principale (11) et une partie de contact (13) assemblées l'une à l'autre par emboîtement d'une ouverture (15) polygonale dans une portion (16) de section polygonale de forme complémentaire de celle de l'ouverture (15).

14. Véhicule, notamment un véhicule automobile, comprenant un siège (1) escamotable selon l'une des revendications 1 à 13.

## Patentansprüche

1. Zurückziehbarer Sitz (1) für eine Fahrzeug, umfassend eine Sockeleinheit (2), die an den Boden eines Fahrzeugs fixiert werden kann, eine Rückenlehne (4), die mit der Sockeleinheit (2) durch eine Schwenkverbindung (P1) verbunden ist, wobei die Rückenlehne (4) zwischen einer nominalen Position, in der die Rückenlehne (4) ausgelegt ist, um den Rücken eines sitzenden Passagiers zu stützen, und einer zurückgezogenen Position, in der die Rückenlehne (4) in einer im Wesentlichen horizontalen Ebene umgeklappt ist, beweglich ist, um einen Laderaum freizumachen, **dadurch gekennzeichnet, dass** die Rückenlehne (4) ein Anschlagstück (10) umfasst, das mit einer Anschlagfläche (12) versehen ist, und dadurch, dass die Sockeleinheit (2) eine Blockierfläche (14) umfasst, die ausgelegt ist, um mit der Anschlagfläche (12) zusammenzuarbeiten, um die Rückenlehne (4) in einer Zwischenposition APA zu blockieren, die zwischen der nominalen Position und der zurückgezogenen Position liegt, um einen Raum hinter dem Sitz (1) freizugeben, wobei das Anschlagstück (10) mit Bezug auf die Rückenlehne (4) zwischen einer aktiven Position, in der die Anschlagfläche (12) ausgelegt ist, um gegen die Blockierfläche (14) in Auflage zu kommen, wenn die Rückenlehne (4) aus der nominalen Position in die zurückgezogene Position verschoben wird, und einer umgeklappten Position, in der die Anschlagfläche (12) von der Blockierfläche (14) während der gesamten Verschiebung der Rückenlehne (4) aus der nominalen Position in die zurückgezogenen Position beabstandet ist, beweglich ist, um das Zurückziehen des Rückenlehne (4) zu ermöglichen, und wobei das Anschlagstück (10) eine Mitnahmefläche (18) umfasst und der Sitz (1) ein Übertragungsstück (20) umfasst, das mit einer Auflagefläche (22) versehen ist, die ausgelegt ist, um mit der Mitnahmefläche (18) zusammenzuarbeiten, wobei das Übertragungsstück (20) mit Bezug auf die Sockeleinheit (2) zwischen einer ersten Position, die einer Verriegelungsposition der Rückenlehne (4) in der nominalen Position entspricht, und einer zweiten Position, die einer Entriegelungsposition der Rückenlehne (4) entspricht, beweglich ist, die die Verschiebung der Rückenlehne (4) aus der nominalen Position in die zurückgezogene Position ermöglicht, wobei die Mitnahmefläche (18) ausgelegt ist, um gegen die Auflagefläche (22) in Auflage zu kommen, wenn das Anschlagstück (10) aus der umgeklappten Position in die aktive Position verschoben wird, so dass die Verschiebung des Anschlagstücks (10) aus der umgeklappten Position in die aktive Position durch Auflage der Mitnahmefläche (18) gegen die Auflagefläche (22), die Verschiebung des Übertragungsstücks (20) aus der ersten Position in die zweite Position und folglich die Entriegelung der Rückenlehne (4) verursacht.

2. Sitz (1) nach Anspruch 1, **dadurch gekennzeichnet, dass** der Sitz (1) Mitnahmemittel umfasst, die ausgelegt sind, um die Verschiebung des Übertragungsstücks (20) aus der zweiten Position bis zur ersten Position gleichzeitig mit der Rückkehr der Rückenlehne (4) in die nominale Position zu verursachen, und die Auflagefläche (22) ausgelegt ist, um gegen die Mitnahmefläche (18) in Auflage zu gelangen, wenn das Übertragungsstück (20) aus der zweiten Position in die erste Position verschoben wird, so dass die Rückkehr der Rückenlehne (4) in die nominale Position gleichzeitig durch Auflage der Auflagefläche (22) gegen die Mitnahmefläche (18) die Verschiebung des Anschlagstücks (10) aus der aktiven Position in die umgeklappte Position verursacht.

3. Sitz (1) nach Anspruch 1 oder 2, **dadurch gekennzeichnet, dass** der Sitz (1) ein Rückzugssteuerorgan (24) umfasst, um einem Benutzer zu ermöglichen, das Zurückziehen der Rückenlehne (4) zu steuern, und dadurch, dass das Rückzugssteuerorgan (24) mit dem Übertragungsstück (20) verbunden ist, um die Verschiebung des Übertragungsstücks (20) aus der ersten Position in die zweite Position anzutreiben.

4. Sitz (1) nach einem der Ansprüche 1 bis 3, **dadurch gekennzeichnet, dass** das Anschlagstück (10) einen ersten Arm (28) umfasst, auf dem die Anschlagfläche (12) angebracht ist, und einen zweiten Arm (30), auf dem die Mitnahmefläche (18) angebracht ist, wobei der zweite Arm (30) mit Bezug auf den ersten Arm (28) gemäß einer im Wesentlichen transversalen Richtung versetzt ist.

5. Sitz (1) nach einem der Ansprüche 1 bis 3, wobei die Anschlagfläche (12) und die Mitnahmefläche (18) auf einem gleichen Arm (30) des Anschlagstücks (10) angeordnet sind.

6. Sitz (1) nach Anspruch 4 oder 5, **dadurch gekennzeichnet, dass** das Anschlagstück (10) einen dritten Arm (36) umfasst und die Rückenlehne (4) ein Steuerorgan (34) umfasst, das mit dem dritten Arm (36) verbunden ist, um das Anschlagstück (10) aus der umgeklappten Position in die aktive Position zu verschieben.

7. Sitz (1) nach einem der Ansprüche 1 bis 6, **dadurch gekennzeichnet, dass** die Sockeleinheit (2) mindestens einen seitlichen Flansch (6) umfasst und der mindestens eine seitliche Flansch (6) einen gekrümmten Rand (38) umfasst, von dem ein Ende die Blockierfläche (14) begrenzt.

8. Sitz (1) nach einem der Ansprüche 1 bis 7, **dadurch gekennzeichnet, dass** die Rückenlehne (4) bistabile Rückstellmittel umfasst, um das Anschlagstück (10) in die aktive Position zurückzustellen, wenn sich das Anschlagstück (10) in der aktiven Position befindet, und um das Anschlagstück (10) in die umgeklappte Position zurückzustellen, wenn sich das Anschlagstück (10) in der umgeklappten Position befindet.

9. Sitz (1) nach Anspruch 8, **dadurch gekennzeichnet, dass** die Rückstellmittel eine einzige Feder (40) umfassen.

10. Sitz (1) nach einem der Ansprüche 1 bis 9, wobei das Anschlagstück (10) konfiguriert ist, um einer Zugkraft ausgesetzt zu sein, wenn der Sitz (1) in der Zwischenposition APA blockiert ist.

11. Sitz (1) nach einem der Ansprüche 1 bis 10, wobei die Anschlagfläche (12) im Wesentlichen eben ist.

12. Sitz (1) nach einem der Ansprüche 1 bis 11, wobei das Anschlagstück (10) aus einem einzigen und gleichen Stück gebildet ist.

13. Sitz (1) nach einem der Ansprüche 1 bis 11, wobei das Anschlagstück (10) einen Hauptteil (11) und einen Kontaktteil (13) umfasst, die miteinander durch Ineinandergreifen einer polygonalen Öffnung (15) in einen Abschnitt (16) mit polygonalem Schnitt komplementärer Form zu demjenigen der Öffnung (15) zusammengebaut sind.

14. Fahrzeug, insbesondere Kraftfahrzeug, umfassend einen zurückziehbaren Sitz (1) nach einem der Ansprüche 1 bis 13.

## Claims

1. A retractable seat for a vehicle (1), comprising a base assembly (2) which may be attached to the floor of a vehicle, a backrest (4) connected to the base assembly (2) by a pivot connection (P1), the backrest (4) being movable between a nominal position in which the backrest (4) is intended to support the back of a seated passenger and a retracted position in which the backrest (4) is folded into a substantially horizontal plane so as to clear a loading space, **characterized in that** the backrest (4) comprises an abutment part (10) provided with an abutment surface (12), and **in that** the base assembly (2) comprises a blocking surface (14) intended to cooperate with the abutment surface (12) so as to block the backrest (4) in an intermediate RSA position comprised between the nominal position and the retracted position in order to free a space to the rear of the seat (1), the abutment part (10) being movable relative to the backrest (4) between an active position, in which the abutment surface (12) is intended to bear against the blocking surface (14) when the backrest (4) is displaced from the nominal position to the retracted position, and a retracted position, in which the abutment surface (12) is at a distance from the blocking surface (14) during the entire displacement of the backrest (4) from the nominal position to the retracted position so as to enable the backrest (4) retraction, and wherein the abutment part (10) comprises a drive surface (18), and the seat (1) comprises a transmission part (20) provided with a bearing surface (22) intended to cooperate with the drive surface (18), the transmission part (20) being movable relative to the base assembly (2) between a first position, corresponding to a locking position of the backrest (4) in the nominal position, and a second position, corresponding to an unlocking position of the backrest (4) enabling the displacement of the backrest (4) from the nominal position to the retracted position, the drive surface (18) being intended to bear against the bearing surface (22) when the abutment part (10) is displaced from the retracted position to the active position, so that the displacement of the abutment part (10) from the retracted position to the active position causes, by bearing of the drive surface (18) against the bearing surface (22), the displacement of the transmission part (20) from the first position to the second position and consequently the unlocking of the backrest (4).

2. The seat (1) according to claim 1, **characterized in that** the seat (1) comprises drive means intended to cause the displacement of the transmission part (20) from the second position up to the first position, concurrently with the return of the backrest (4) to the nominal position, and the bearing surface (22) is intended to bear against the drive surface (18) when the transmission part (20) is displaced from the second position to the first position, so that the return of the backrest (4) to the nominal position concurrently causes, by bearing of the bearing surface (22) against the drive surface (18), the displacement of the abutment part (10) from the active position to the retracted position.

3. The seat (1) according to claim 1 or 2, **characterized in that** the seat (1) comprises a retraction control member (24) for enabling a user to control the backrest (4) retraction, and **in that** the retraction control member (24) is connected to the transmission part (20) so as to cause the displacement of the transmission part (20) from the first position to the second position.

4. The seat (1) according to any of claims 1 to 3, **characterized in that** the abutment part (10) comprises a first arm (28) on which the abutment surface (12) is arranged, and a second arm (30) on which the drive surface (18) is arranged, the second arm (30) being shifted relative to the first arm (28) along a substantially transverse direction.

5. The seat (1) according to any of claims 1 to 3, wherein the abutment surface (12) and the drive surface (18) are arranged on the same arm (30) of the abutment part (10).

6. The seat (1) according to claim 4 or 5, **characterized in that** the abutment part (10) comprises a third arm (36), and the backrest (4) comprises a control member (34) connected to the third arm (36) for displacing the abutment part (10) from the retracted position to the active position.

7. The seat (1) according to any of claims 1 to 6, **characterized in that characterized in that** the base assembly (2) comprises at least one lateral flange (6), and said at least one lateral flange (6) comprises a curved edge (38), an end of which delimits the blocking surface (14).

8. The seat (1) according to any of claims 1 to 7, **characterized in that** the backrest (4) comprises bistable return means for returning the abutment part (10) in the active position when the abutment part (10) is in the active position, and for returning the abutment part (10) in the retracted position when the abutment part (10) is in the retracted position.

9. The seat (1) according to claim 8, **characterized in that** the return means comprise one single spring (40).

10. The seat (1) according to any of claims 1 to 9, wherein the abutment part (10) is configured to sustain a tensile force when the seat (1) is blocked in the intermediate RSA position.

11. The seat (1) according to any of claims 1 to 10, wherein the abutment surface (12) is substantially planar.

12. The seat (1) according to any of claims 1 to 11, wherein the abutment part (10) is formed into one single piece.

13. The seat (1) according to any of claims 1 to 11, wherein the abutment part (10) comprises a main portion (11) and a contact portion (13) assembled to each other by nesting a polygonal opening (15) into a portion (16) with a polygonal section having a shape which is complementary to that of the opening (15).

14. A vehicle, in particular a motor vehicle, comprising a retractable seat (1) according to any of claims 1 to 13.
